# FASCICULE DE BREVET EUROPEEN

(11) **EP 3 122 698 B1**
(45) Date de publication et mention de la délivrance du brevet: **26.09.2018**
(21) Numéro de dépôt: 15719780.7
(22) Date de dépôt: 24.03.2015
(51) Int. Cl.: C04B 28/06, C04B 28/16

(54) **LIANT SULFOALUMINEUX BELITIQUE**
BELIT-SULFOALUMINATBINDEMITTEL
BELITE SULFOALUMINATE BINDER

(30) Priorité: 25.03.2014 FR 1452535
(43) Date de publication de la demande: 01.02.2017
(73) Titulaire: Lafarge, 75116 Paris (FR)
(72) Inventeur: GARTNER, Ellis, F-38291 Saint Quentin Fallavier (FR); MORIN, Vincent, F-38291 Saint Quentin Fallavier (FR)
(74) Mandataire: Regimbeau
(86) Numéro de dépôt international: PCT/FR2015/050739
(87) Numéro de publication internationale: WO 2015/145060

(56) Documents cités:
- EP-A1- 0 736 489
- FR-A1- 2 941 449
- Cen ET AL: "European Standard EN 197-1: Cement -Part 1: Composition, specifications and conformity criteria for common cements", , 31 December 2000 (2000-12-31), XP055420856, Retrieved from the Internet: URL:http://www.holcim.az/fileadmin/templat es/AZ/images/Technical_Solutions/EN-197-1_ en.pdf [retrieved on 2017-11-01]

## Description

La présente invention se rapporte à un liant hydraulique comprenant un clinker sulfoalumineux bélitique, par exemple un clinker bélite-calcium-sulfoaluminate-ferrite (BCSAF).

Les clinkers sulfoalumineux bélitiques sont des clinkers ayant une faible teneur en alite, en particulier une teneur en alite inférieure ou égale à 5 % en masse, ou n'ayant pas d'alite. L'alite est une des « phases minéralogiques » (appelées « phases » dans la suite de la description) des clinkers connus du type Portland. L'alite comprend du silicate tricalcique Ca₃SiO₅ (qui peut aussi être symbolisé C₃S ou 3(CaO)•(SiO₂) comme expliqué ci-après).

Le procédé de fabrication des clinkers sulfoalumineux bélitiques est tel que ces clinkers présentent comme avantage de réduire significativement les émissions de CO₂ comparativement à la fabrication des clinkers connus du type Portland.

Des clinkers et des liants hydrauliques comprenant du sulfoaluminate de calcium et de la bélite sont connus. FR2941449A1 divulgue une composition comprenant au moins, en % exprimé en masse par rapport à la masse totale de composition, de 5 à 80 % d'additions minérales comme les fumées de silices; et de 20 à 95 % d'un clinker Belite-Calcium-Sulphoalumineux-Ferrite (BCSAF) comprenant au moins en % exprimé en masse par rapport à la masse totale de clinker BCSAF de 5 à 30 %, de phase aluminoferrite calcique d'une composition correspondant à la formule générale C₂A_{X}F₍₁₋ₓ₎, avec X compris de 0,2 à 0,8, de 10 à 35 %, de phase sulfoaluminate de calcium "ye'elimite" C4A3$, de 40 à 75 % de bélite (C₂S), de 0,01 à 10 % d'une ou plusieurs phases mineures choisies parmi les sulfates de calcium, les sulfates alcalins, la perovskite, les aluminates de calcium, la géhlénite, la chaux libre et la périclase, et/ou une phase vitreuse, et en ce qu'il contient un ou plusieurs éléments secondaires choisis parmi le soufre, le magnésium, le sodium, le potassium, le bore, le phosphore, le zinc, le manganèse, le titane, le fluor, le chlore. L'acquisition des résistances mécaniques, notamment au-delà de 1 jour après le gâchage, dépend de la cinétique d'hydratation des phases présentes dans le clinker ou le liant hydraulique, notamment de la phase bélite. Il est cependant difficile d'améliorer l'acquisition des résistances mécaniques, notamment au-delà de 1 jour après le gâchage, pour les clinkers ou liants hydrauliques comprenant une phase bélite. En effet, les accélérateurs de durcissement qui fonctionnent avec un clinker ou un liant hydraulique comprenant majoritairement une phase alite, ne fonctionnent généralement pas avec un clinker ou un liant hydraulique comprenant majoritairement une phase bélite. Les propriétés des clinkers ou liants hydrauliques comprenant du sulfoaluminate de calcium et majoritairement une phase bélite sont affectées par les phases principales et les phases mineures supplémentaires qui sont présentes dans le clinker ou le liant, ainsi que leurs quantités respectives. Les propriétés de ces clinkers ou liants sont également affectées par la présence d'éléments secondaires dans le clinker ou le liant et leurs quantités respectives. L'interaction entre ces différents facteurs rend très difficile la prédiction des propriétés d'un clinker ou d'un liant simplement à partir de la connaissance de sa composition chimique, des phases qui sont présentes et des quantités respectives de ces phases. La facilité de fabrication d'un clinker, la facilité de broyage d'un clinker pour obtenir un liant hydraulique et les différentes propriétés chimiques et mécaniques d'une composition hydraulique comprenant le liant peuvent toutes être affectées.

Les formules chimiques dans le domaine des liants hydrauliques sont souvent exprimées sous forme de sommes des oxydes qu'elles contiennent : ainsi, le silicate tricalcique Ca₃SiO₅, peut aussi être écrit 3CaO•SiO₂. Il est entendu que cela ne signifie pas que les oxydes ont une existence propre dans le liant hydraulique.

Les formules des oxydes communément rencontrés dans le domaine des liants hydrauliques sont également abrégées avec une seule lettre, comme suit :
C représente CaO,
A représente Al₂O₃,
F représente Fe₂O₃,
S représente SiO₂,
$ représente SO₃,
M représente MgO, et
T représente TiO₂.

Ces formules d'oxydes sont utilisées de manière connue par l'homme du métier dans le domaine des matériaux du bâtiment pour représenter la composition élémentaire d'un liant hydraulique, car tous les éléments concernés sont généralement présents en combinaison avec l'oxygène dans les proportions données ci-avant par les formules de ces oxydes. Néanmoins, il est entendu que cela ne signifie pas que les oxydes ont nécessairement une existence propre dans le liant hydraulique.

Un problème des liants et compositions hydrauliques comprenant un clinker sulfoalumineux bélitique est l'acquisition de résistances mécaniques en compression satisfaisantes au-delà de 1 jour à 20°C.

Il existe des solutions pour améliorer l'acquisition des résistances mécaniques en compression au-delà de 1 jour à 20°C pour les clinkers Portland, mais, comme expliqué ci-avant, le clinker sulfoalumineux bélitique a une chimie différente du clinker Portland, et il n'est pas possible de prédire si une solution efficace avec un clinker Portland fonctionnera avec un clinker sulfoalumineux bélitique. Par exemple, il est connu que le chlorure de calcium améliore la cinétique d'acquisition des résistances mécaniques d'un clinker Portland, mais diminue la cinétique d'acquisition des résistances mécaniques d'un clinker sulfoalumineux bélitique.

D'autre part, il existe des solutions pour améliorer l'acquisition des résistances mécaniques en compression au-delà de 1 jour à 20°C d'un clinker sulfoalumineux bélitique, mais la plupart de ces solutions est basée sur des adjuvants organiques, qui ont souvent des effets secondaires indésirables. Par exemple, il est connu que l'acide citrique améliore les résistances mécaniques en compression 28 jours après le gâchage, mais diminue les résistances mécaniques en compression 1 jour après le gâchage.

Afin de répondre aux exigences des utilisateurs, il est devenu nécessaire de trouver un moyen pour améliorer la cinétique d'acquisition des résistances mécaniques en compression au-delà de 1 jour à 20°C d'un clinker sulfoalumineux bélitique, tout en évitant les effets secondaires indésirables des solutions connues.

Aussi le problème que se propose de résoudre l'invention est de fournir un moyen pour améliorer la cinétique d'acquisition des résistances mécaniques en compression au-delà de 1 jour, en particulier aux alentours de 20°C, d'un clinker sulfoalumineux bélitique.

De manière inattendue, les inventeurs ont mis en évidence qu'il est possible d'utiliser une silice particulière pour améliorer la cinétique d'acquisition des résistances mécaniques en compression au-delà de 1 jour, de préférence à partir de 7 jours, plus préférentiellement à partir de 14 jours après le gâchage, en particulier aux alentours de 20°C, des liants hydrauliques comprenant un clinker sulfoalumineux bélitique.

La présente invention se rapporte à un liant hydraulique comprenant un clinker sulfoalumineux bélitique et de la silice ayant une surface spécifique BET sous azote d'au moins 50 m²/g, la quantité de silice varie de 0,5 à 3%, pourcentage exprimé en masse de SiO₂ par rapport à la masse de liant.

De préférence, la surface spécifique BET de la silice utilisée selon la présente invention est supérieure ou égale à 60 m²/g sous azote.

De préférence, la silice utilisée selon la présente invention est hydrophile. La quantité de silice utilisée selon la présente invention est de 0,5 à 3 %, exprimé en masse sèche par rapport à la masse de liant. Le liant comprend le clinker, éventuellement du sulfate de calcium et éventuellement au moins une addition minérale.

La silice utilisée selon la présente invention comprend de préférence au moins 80 % en masse de SiO₂.

La silice utilisée selon la présente invention est de préférence une silice précipitée en phase gazeuse ou liquide, par exemple en phase aqueuse.

La silice utilisée selon la présente invention peut être préparée par toute méthode connue. Par exemple, la silice utilisée selon la présente invention peut être préparée par neutralisation d'une solution de silicate alcalin par un acide (par exemple l'acide chlorhydrique), puis par filtration. La silice peut également être préparée par hydrolyse d'alcoxyde de silicium dans l'eau ou dans une phase vapeur. La silice peut également être préparée par réaction entre un chlorure ou un fluorure de silicium et de la vapeur d'eau ou du dioxygène. Généralement, la silice précipitée en phase gazeuse est plus fine.

De préférence, le liant hydraulique selon la présente invention ne comprend pas de composé d'aluminium choisi parmi le sulfate d'aluminium, les sulfates basiques d'aluminium, les aluns et leurs mélanges.

Le clinker sulfoalumineux bélitique utilisé selon la présente invention comprend généralement jusqu'à 80 %, de préférence jusqu'à 60 %, plus préférentiellement jusqu'à 50 % en masse de sulfoaluminate de calcium. Il comprend de préférence au moins 10 %, plus préférentiellement au moins 20 % en masse de sulfoaluminate de calcium. Le sulfoaluminate de calcium, aussi connu sous le nom de ye'elimite, est de formule générale C₄A₃$.

Le clinker sulfoalumineux bélitique comprend également de la bélite. La bélite est de formule générale C₂S. La quantité minimale de bélite est généralement d'au moins 15 %, de préférence d'au moins 20 %, plus préférentiellement d'au moins 30 % en masse. La quantité maximale de bélite est de préférence de moins de 80 %, plus préférentiellement de moins de 70 %, encore plus préférentiellement de moins de 65 % en masse. Dans ce cas, le clinker sulfoalumineux est un clinker sulfoalumineux bélitique.

De préférence, la bélite est partiellement ou totalement cristallisée sous la forme α'. Plus préférentiellement, au moins 50 %, par exemple au moins 80 %, particulièrement de 85 à 100 % en masse de bélite est cristallisée sous la forme α'.

Le clinker sulfoalumineux bélitique comprend également de préférence de l'aluminoferrite de calcium. L'aluminoferrite de calcium est de formule générale C₂AₓF(₁₋ₓ₎, dans laquelle x est de 0,2 à 0,8. La quantité d'aluminoferrite de calcium est de préférence d'au moins 5 %, plus préférentiellement d'au moins 10 %, encore plus préférentiellement d'au moins 15 % en masse.

Dans le cas où le clinker sulfoalumineux bélitique comprend du sulfoaluminate de calcium, de la bélite et de l'aluminoferrite de calcium, il s'agit d'un clinker de type bélite-calcium-sulfoaluminate-ferrite (BCSAF).

De préférence, le clinker utilisé selon la présente invention est un clinker BCSAF.

Le clinker sulfoalumineux bélitique comprend de préférence, en masse par rapport à la masse totale de clinker sulfoalumineux bélitique :
de 5 à 30 % de phase aluminoferrite de calcium ;
de 10 à 35 % de phase sulfoaluminate de calcium ; et
de 40 à 75 % de phase bélite.

De préférence, le clinker sulfoalumineux bélitique comprend au plus 5 %, plus préférentiellement moins de 1 % en masse d'une phase alite.

Le clinker sulfoalumineux bélitique peut également comprendre de 0,01 à 10 % d'au moins une des phases mineures sélectionnées parmi : sulfate de calcium, sulfate de métal alcalin, perovskite, mono-aluminate de calcium (par exemple aluminate tricalcique), géhlénite, chaux libre, périclase, C₁₁S₄B, mayenite, , ferroperovskite, spinelle, ternésite et/ou une phase vitreuse.

Le total des pourcentages d'aluminoferrite de calcium, de sulfoaluminate de calcium, de bélite et de phases mineures est de préférence supérieur ou égal à environ 97 %, plus préférentiellement supérieur ou égal à environ 98 %, encore plus préférentiellement supérieur ou égal à environ 99%, par exemple environ 100 %.

Selon une variante, le clinker sulfoalumineux bélitique peut comprendre :
de 10 à 25 % de phase aluminoferrite de calcium ;
de 15 à 30 % de phase sulfoaluminate de calcium ;
de 45 à 70 % de phase bélite ; et
de 0,01 à 5 % d'au moins une des phases mineures.

Plus préférentiellement, le clinker sulfoalumineux comprend :
de 15 à 25 % de phase aluminoferrite de calcium ;
de 20 à 30 % de phase sulfoaluminate de calcium ;
de 45 à 60 % de phase bélite ; et
de 0,01 à 5 % d'au moins une des phases mineures.

La bélite pure a pour formule générale 2(CaO)•(SiO₂), (i.e. C₂S) ; le sulfoaluminate de calcium pur a pour formule générale 4(CaO)•3(Al₂O₃)•(SO₃), (i.e.C₄A₃$). La bélite, le sulfoaluminate de calcium, la ferroperovskite, la ternésite et les autres phases additionnelles de formules générales données ci-avant peuvent aussi comprendre des éléments de substitution.

Chaque phase citée dans le clinker utilisé selon la présente invention est cristalline (à l'exception de la phase vitreuse) et a son propre spectre de diffraction aux rayons X. La quantité des phases dans le clinker est généralement déterminée par diffraction aux rayons X en utilisant une analyse de type Rietveld. La phase vitreuse n'est pas cristalline et n'a donc pas de profil caractéristique de diffraction aux rayons X. La quantité de phase vitreuse est généralement déterminée à partir du spectre complet par diffraction aux rayons X du clinker.

Le clinker sulfoalumineux bélitique utilisé selon la présente invention peut comprendre la phase C₂AS (généralement moins de 5 %), CA (généralement moins de 10 %), C₃FT (généralement moins de 3 %) et/ou C₁₂A₇ (généralement moins de 3 %).

Le clinker comprend, de préférence, de 5 à 13 %, plus préférentiellement de 9 à 13 %, de fer exprimé en Fe₂O₃..

Le clinker sulfoalumineux bélitique utilisé selon l'invention comprend généralement de 2 à 10 % de soufre exprimés en SO₃. De préférence le clinker sulfoalumineux ne comprend pas de phase C₃S.

Le clinker comprend, selon une variante, de 0,2 à 3 %, plus préférentiellement de 0,2 à 2 %, par exemple de 1 à 2 %, de bore exprimé en anhydride borique.

Le clinker utilisé selon la présente invention peut comprendre, dans les phases principales et/ou dans les autres phases, un ou plusieurs des éléments secondaires choisis parmi le sodium, le potassium, le fluor, le chlore, le magnésium, le titane, le manganèse, le strontium, le zirconium, le phosphore et leurs mélanges. La quantité totale d'éléments secondaires dans le clinker sulfoalumineux est de préférence inférieure ou égale à 19 %, plus préférentiellement inférieure ou égale à 15 %, exprimés en oxydes équivalents.

Dans le clinker sulfoalumineux bélitique utilisé selon la présente invention, l'élément secondaire est généralement présent dans les quantités suivantes :
de 0 à 5 %, de préférence de 0,01 à 2 %, plus préférentiellement de 0,02 à 1,5 %, par exemple de 0,02 à 1 % de sodium exprimé en équivalent oxyde de sodium,
de 0 à 5 %, de préférence de 0,1 à 2 %, plus préférentiellement de 0,2 à 1,5 %, par exemple de 0,2 à 1 % de potassium exprimé en équivalent oxyde de potassium,
de 0 à 7 %, de préférence de 0 à 5 %, plus préférentiellement de 0 à 3 % de phosphore exprimé en équivalent pentoxyde de phosphore.

De préférence le clinker utilisé selon l'invention comprend le sodium et le potassium en tant qu'éléments secondaires.

Selon une variante, le clinker sulfoalumineux bélitique utilisé selon la présente invention peut comprendre comme phases principales, en % exprimé en masse par rapport à la masse totale de clinker :
(i) de 15 à 36 % d'une phase bélite ;
(ii) de 37 à 56 % d'une phase sulfoaluminate de calcium ; et
(iii) de 1 à 28 % d'une phase ferroperovskite, comprenant du calcium, de l'aluminium, du silicium, du magnésium et de fer, et caractérisée par des pics de diffraction aux rayons X (2-theta) à 33,2°, 47,7° et 59,4° utilisant des rayons X CuK_{α'} ayant une longueur d'onde de 0,15406 nm ;
le clinker comprenant : de 3 à 15 % de fer exprimé en Fe₂O₃; et de 0,2 à 5 % de bore exprimé en anhydride borique.

Selon une autre variante, le clinker sulfoalumineux bélitique utilisé selon la présente invention peut comprendre comme phases principales, en % exprimé en masse par rapport à la masse totale de clinker :
(i) de 36 à 53 % d'une phase sulfoaluminate de calcium ; et
(ii) de 31 à 50 % d'une phase bélite ;
le clinker comprenant : moins de 3 % de fer exprimé en Fe₂O₃ ; et de 0,2 à 5 % de bore exprimé en anhydride borique.

Le clinker sulfoalumineux bélitique peut par exemple être obtenu selon le procédé décrit dans la demande de brevet WO 2006/018569.

Le clinker sulfoalumineux bélitique peut également être réalisé selon un procédé qui comprend la clinkérisation, de préférence à une température de 1150°C à 1400°C, plus préférentiellement de 1200°C à 1325°C, de sources de calcium, silicium, soufre, alumine, magnésium, fer et bore capables, par clinkérisation, de fournir les phases telles décrites ci-avant.

Le clinker sulfoalumineux bélitique selon l'invention peut par exemple être réalisé de la manière suivante :
a) préparer un cru comprenant une matière première ou un mélange de matières premières capable, par clinkérisation, de fournir les phases telles que décrites ci-avant ;
b) mélanger le cru obtenu à l'étape a) avec au moins un additif fournissant un élément secondaire tel que cité ci-avant, dans des quantités telles que, après clinkérisation, la quantité totale d'éléments secondaires, exprimée tel qu'indiqué ci-avant, est inférieure ou égale à 19 % en masse par rapport à la masse totale de clinker sulfoalumineux bélitique ; et
c) calciner le mélange obtenu à l'étape b), par exemple, à une température de 1150°C à 1400°C, de préférence de 1200°C à 1325°C, par exemple pendant au minimum 15 minutes en atmosphère suffisamment oxydante pour éviter la réduction du sulfate de calcium en dioxyde de soufre.

De préférence, les matières premières pouvant convenir pour réaliser l'étape a) du procédé décrit ci-avant peuvent provenir de carrières ou résulter d'un procédé industriel et comprennent :
une source de silicium, par exemple un sable, une argile, une marne, des cendres volantes, des cendres de combustion du charbon, une pouzzolane ou une fumée de silice ;
une source de calcium, par exemple un calcaire, une marne, des cendres volantes, des cendres de combustion du charbon, un laitier, une pouzzolane ou des résidus de calcination des ordures ménagères ;
une source d'alumine, par exemple une argile, une marne, des cendres volantes, des cendres de combustion du charbon, une pouzzolane, une bauxite, une boue rouge d'alumine (notamment une boue d'alumine provenant de déchets industriels au cours de l'extraction de l'alumine), une latérite, une anorthosite, une albite ou un feldspath ;
une source de soufre ;
une source de magnésium ;
une source de fer, par exemple un oxyde de fer, une latérite, un laitier d'aciérie ou un minerai de fer ; et
une source de bore.

La source de bore peut comprendre, par exemple, la colemanite (di-calcium hexaborate pentahydrate), le borax ou l'acide borique, de préférence la colemanite. La source de bore peut provenir de carrières ou résulter d'un procédé industriel.

Le cru peut aussi comprendre un sulfate de calcium, par exemple du gypse, du sulfate de calcium hémihydraté (α ou β) ou du sulfate de calcium anhydre.

La préparation du cru de l'étape a) peut être réalisée par mélange des matières premières. Les matières premières peuvent être mélangées à l'étape a) par mise en contact, comprenant éventuellement une étape de broyage et/ou d'homogénéisation. Les matières premières de l'étape a) peuvent éventuellement être séchées avant l'étape a) ou calcinées avant l'étape a).

Les matières premières peuvent être ajoutées séquentiellement, dans l'entrée principale du four, et/ou dans d'autres entrées du four. De plus, les résidus de combustion peuvent aussi être intégrés dans le four.

De préférence, les matières premières pouvant convenir pour réaliser l'étape b) du procédé décrit ci-avant sont :
une source de bore, par exemple du borax, l'acide borique, la colémanite ou tout autre composé contenant du bore : la source de bore peut venir d'une carrière ou résulter d'un procédé industriel ;
une source de magnésium, par exemple un sel de magnésium ;
une source de sodium, par exemple un sel de sodium ;
une source de potassium, par exemple un sel de potassium ;
une source de phosphore, par exemple un sel de phosphore ;
ou leurs mélanges.

Les matières premières pouvant convenir pour réaliser l'étape b) sont sous forme de solide (par exemple de poudre), de semi-solide ou de liquide.

L'étape c) est une étape de clinkérisation, ce qui signifie au sens de l'invention une étape de cuisson. Par clinkérisation, on entend au sens de l'invention la réaction entre les éléments chimiques de l'étape b) qui conduit à la formation des phases du clinker sulfoalumineux selon la présente invention. Cette étape peut être réalisée dans un four de cimenterie conventionnel (par exemple un four rotatif) ou dans un autre type de four (par exemple un four à passage).

Par atmosphère suffisamment oxydante, on entend par exemple l'air atmosphérique, mais d'autres atmosphères suffisamment oxydantes peuvent convenir.

Un liant hydraulique est un matériau qui prend et durcit par hydratation. Un liant hydraulique comprend généralement un clinker, du sulfate de calcium et éventuellement une addition minérale.

Un clinker sulfoalumineux bélitique peut être co-broyé avec du sulfate de calcium pour donner un ciment. Le sulfate de calcium utilisé inclut le gypse (sulfate de calcium dihydraté, CaSO₄.2H₂O), le semi-hydrate (CaSO₄.1/2H₂O), l'anhydrite (sulfate de calcium anhydre, CaSO₄) ou un de leurs mélanges. Le gypse et l'anhydrite existent à l'état naturel. Il est également possible d'utiliser un sulfate de calcium qui est un sous-produit de certains procédés industriels.

De préférence le liant hydraulique selon l'invention comprend de 0,1 à 40 %, plus préférentiellement de 0,1 à 20 %, encore plus préférentiellement de 0,1 à 10 % de sulfate de calcium, % en masse par rapport à la masse totale de liant hydraulique.

De préférence, le liant hydraulique comprend en outre une addition minérale. Les additions minérales sont, par exemple, des laitiers (par exemple tels que définis dans la norme NF EN 197-1 de février 2001, paragraphe 5.2.2), des pouzzolanes naturelles ou artificielles (par exemple telles que définies dans la norme NF EN 197-1 de février 2001, paragraphe 5.2.3), des cendres volantes (par exemple telles que définies dans la norme NF EN 197-1 de février 2001, paragraphe 5.2.4), des schistes calcinés (par exemple tels que définis dans la norme NF EN 197-1 de février 2001, paragraphe 5.2.5), des additions minérales à base de carbonate de calcium, par exemple du calcaire (par exemple tel que défini dans la norme NF EN 197-1 de février 2001, paragraphe 5.2.6), des fumées de silice (par exemple telles que définies dans la norme NF EN 197-1 de février 2001, paragraphe 5.2.7), des métakaolins, des cendres de biomasse (par exemple des cendres de cosses de riz) ou leurs mélanges.

De préférence, l'addition minérale comprend une pouzzolane, un laitier, une cendre volante ou leurs mélanges. L'addition minérale peut comprendre aussi une addition minérale comprenant du carbonate de calcium, par exemple du calcaire.

De préférence, le liant hydraulique comprend de 0,1 à 70 %, plus préférentiellement de 0,1 à 50 %, encore plus préférentiellement de 0,1 à 30 % d'additions minérales, % en masse par rapport à la masse totale de liant hydraulique.

De préférence, le liant hydraulique comprend en masse de 30 à 99,8 % d'un clinker selon la présente invention ; de 0,1 à 40 % de sulfate de calcium ; et de 0,1 à 69,9 % d'additions minérales ; le total des pourcentages étant supérieur ou égal à 97 %.

Il est entendu que remplacer une partie du clinker par une addition minérale permet de réduire les émissions de dioxyde de carbone (produites lors de la fabrication du clinker) par diminution de la quantité de clinker, tout en obtenant les mêmes résistances mécaniques.

La présente invention se rapporte également à un procédé de fabrication d'un liant hydraulique selon la présente invention, dans lequel un clinker sulfoalumineux bélitique est mis en contact avec 0,5 à 3% de silice ayant une surface spécifique BET sous azote d'au moins 50 m²/g, de préférence d'au moins 60 m²/g, le pourcentage étant exprimé en masse par rapport à la masse de liant. De préférence, le clinker et la silice sont mélangés ou co-broyés.

La présente invention se rapporte également à une composition hydraulique comprenant le liant hydraulique selon la présente invention et de l'eau.

Une composition hydraulique comprend généralement un liant hydraulique et de l'eau, éventuellement des granulats et éventuellement des adjuvants. Les compositions hydrauliques incluent à la fois les compositions à l'état frais et à l'état durci, par exemple un coulis de ciment, un mortier ou un béton. La composition hydraulique peut être utilisée directement sur chantier à l'état frais et coulée dans un coffrage adapté à l'application visée, utilisée en usine de préfabrication ou utilisée en tant qu'enduit sur un support solide.

La quantité d'eau est de préférence telle que le rapport massique eau efficace / liant est de 0,2 à 1,2, plus préférentiellement de 0,3 à 0,8.

Les granulats utilisés incluent du sable (dont les particules ont généralement une taille maximale (Dmax) inférieure ou égale à 4 mm), et des gravillons (dont les particules ont généralement une taille minimale (Dmin) supérieure à 4 mm et de préférence une Dmax inférieure ou égale à 20 mm).

Les granulats incluent des matériaux calcaires, siliceux et silico-calcaires. Ils incluent des matériaux naturels, artificiels, des déchets et des matériaux recyclés. Les granulats peuvent aussi comprendre, par exemple, du bois.

La composition hydraulique peut également comprendre un adjuvant pour composition hydraulique, par exemple un accélérateur, un agent entraîneur d'air, un agent viscosant, un inertant des argiles, un plastifiant et/ou un superplastifiant.

Les inertants des argiles sont des composés qui permettent de réduire ou de prévenir les effets néfastes des argiles sur les propriétés des liants hydrauliques. Les inertants des argiles incluent ceux décrits dans WO 2006/032785 et WO 2006/032786.

Le terme "superplastifiant" tel qu'utilisé dans la présente description et les revendications qui l'accompagnent est à comprendre comme incluant à la fois les réducteurs d'eau et les superplastifiants tels que décrits dans le livre intitulé « Concrete Admixtures Handbook, Properties Science and Technology », V.S. Ramachandran, Noyés Publications, 1984.

Le gâchage de la composition hydraulique peut être effectué, par exemple, selon des méthodes connues.

La composition hydraulique peut être mise en forme pour produire, après hydratation et durcissement, un objet mis en forme pour le domaine de la construction. L'invention se rapporte également à un tel objet mis en forme, qui comprend un liant hydraulique selon la présente invention. Les objets mis en forme pour le domaine de la construction incluent, par exemple, un sol, une chape, une fondation, un mur, une cloison, un plafond, une poutre, un plan de travail, un pilier, une pile de pont, un parpaing, une canalisation, un poteau, un escalier, un panneau, une corniche, un moule, un élément de voirie (par exemple une bordure de trottoir), une tuile de toit, un revêtement (par exemple de route ou de mur) ou un élément isolant (acoustique et/ou thermique).

La présente invention se rapporte également à une utilisation de 0,5 à 3% de silice, pourcentage en masse par rapport à la masse de liant, pour améliorer la résistance en compression au-delà de 1 jour, de préférence à partir de 7 jours, plus préférentiellement à partir de 14 jours après le gâchage, d'un clinker sulfoalumineux bélitique, la silice ayant une surface spécifique BET sous azote d'au moins 50 m²/g, de préférence d'au moins 60 m²/g.

Dans la présente description, et dans les revendications qui l'accompagnent, les pourcentages sont exprimés en masse, excepté quand il en est spécifié autrement.

Les pourcentages des phases sont déterminés par des méthodes connues, par exemple par diffraction aux rayons X en utilisant une analyse Rietveld. L'analyse quantitative d'un clinker est réalisée par analyse Rietveld du spectre obtenu par diffraction aux rayons X de ce clinker. L'échantillon de clinker à analyser est finement broyé pour fournir un échantillon dont toutes les particules passent à travers un tamis dont les mailles font 63 µm. Les spectres de diffraction aux rayons X de référence des phases cristallines présentes dans l'échantillon à analyser (à l'exception de la phase vitreuse qui n'a pas de spectre bien défini) sont obtenus à partir d'échantillons purs de ces phases. Pour quantifier chaque phase cristalline et la phase vitreuse, un spectre de diffraction aux rayons X d'une phase cristalline non présente dans l'échantillon à analyser est utilisé comme référence. Des matériaux de référence convenables incluent le rutile, le quartz et le corindon. Le pourcentage de chaque phase cristalline et de la phase vitreuse dans un échantillon de clinker est ensuite calculé à partir du spectre de diffraction aux rayons X de l'échantillon en utilisant l'analyse Rietveld, les spectres de référence de chaque phase pure et le spectre du matériau de référence qui est généralement le rutile. La méthode de calcul décrite dans le brevet européen No. 1260812 peut être utilisée. Comme la force d'une source de rayons X dans un diffractomètre aux rayons X peut diminuer avec le temps, il est souhaitable de mesurer les spectres de diffraction du matériau de référence et des phases cristallines pures quand le spectre de l'échantillon à analyser est mesuré.

La mesure de la quantité des éléments chimiques présents dans le clinker selon la présente invention est généralement effectuée en utilisant la spectroscopie de fluorescence X. Les résultats sont normalement exprimés en termes d'oxyde de chaque élément.

Les exemples suivants, non restrictifs, illustrent des exemples de réalisation de l'invention.

### EXEMPLES

Le clinker BCSAF-1 avait la composition minéralogique suivante, les chiffres étant exprimés en pourcentages massiques, sauf si autrement spécifié :

| | |
|---|---|
| **Ye'elimite** | 39,1 |
| **Bélite α'** | 32,5 |
| **Bélite β** | 5,3 |
| **Ferrite** | 21,4 |
| **Ferroperovskite** | 1 |
| **Anhydrite** | 0,7 |

Le ciment-1 comprenait 95,5 % de clinker BCSAF-1 et 4,5 % d'anhydrite, en masse par rapport à la masse totale de ciment.

Le clinker BCSAF-2 avait la composition minéralogique suivante, les chiffres étant exprimés en pourcentages massiques, sauf si autrement spécifié :

| | |
|---|---|
| **Ye'elimite** | 30,5 |
| **Bélite β** | 53,8 |
| **Bélite gamma** | 1,7 |
| **Brownmillerite Ca₂AlₓFe₍₂₋ₓ₎O₅** | 14,0 |

Le ciment-2 comprenait 94,4 % de clinker BCSAF-1 et 5,6 % d'anhydrite, en masse par rapport à la masse totale de ciment.

Le clinker BCSAF-3 avait la composition minéralogique suivante, les chiffres étant exprimés en pourcentages massiques, sauf si autrement spécifié :

| | |
|---|---|
| **Ye'elimite orthorhombique** | 32,2 |
| **Bélite β** | 39,4 |
| **Brownmillerite Ca₂AlₓFe₍₂₋ₓ₎O₅** | 28,4 |

Le ciment-3 comprenait 90 % de clinker BCSAF-3 et 10 % d'anhydrite, en masse par rapport à la masse totale de ciment.

La silice était une silice précipitée ayant une surface spécifique BET selon la norme ISO 9277 de 55 m²/g, une taille de particule Dv50 selon la norme ISO 13320-1 de 18,5 µm et au moins 97 % de SiO₂ selon la norme ISO 3262-19 (n° CAS : 112926-00-8 ; nom commercial : Sipernat 360 ; fournisseur : Evonik Industries).

### Exemple 1

L'effet de la silice utilisée selon la présente invention sur la résistance mécanique en compression à partir de 1 jour après le gâchage a été testé sur deux compositions hydrauliques et a été comparé à des témoins ne comprenant pas de silice.

La composition hydraulique testée était un mortier comprenant 450 g de ciment, 1350 g de sable et 225 g d'eau.

Le sable était un sable normalisé qui était un sable siliceux conforme à la norme EN 196-1 d'avril 2006, dont le fournisseur était la Société Nouvelle du Littoral.

Chacun des mortiers testés avait un rapport massique eau / ciment de 0,5.

Le mortier a été fabriqué selon le protocole décrit dans la norme EN 196-1 d'avril 2006, avec un ciment dans lequel la silice a été ajoutée avant le malaxage.

La mesure des résistances mécaniques en compression a été réalisée sur des échantillons de mortier durci en forme de pavé de dimensions 40 mm x 40 mm x 160 mm selon le protocole décrit dans la norme EN 196-1 d'avril 2006.

Le **Tableau 1** ci-après présente les compositions testées et les résultats obtenus pour les résistances mécaniques en compression à 20°C à différentes échéances à partir de 1 jour après le gâchage.

**Tableau 1**

| | **Silice** | **Ciment-1** | **Ciment-2** | **Résistance en compression (MPa)** | |
|---|---|---|---|---|---|
| | | | | **14 jours** | **28 jours** |
| **Témoin1** | 0 | 100 | - | 40 | 45 |
| **Comp.1** | 1 | 99 | - | 44 | 50 |
| **Comp.2** | 3 | 97 | - | 43 | 52 |
| **Témoin2** | 0 | - | 100 | 28 | 31 |
| **Comp.3** | 0,5 | - | 99,5 | 28,5 | 32 |
| **Comp.4** | 2 | - | 98 | 32,5 | 37 |
| **Comp.5** | 3 | - | 97 | 34,5 | 40 |

Dans le tableau précédent, les valeurs sont exprimées en pourcentages massiques, sauf s'il en est spécifié autrement.

D'après le **Tableau 1** ci-avant, en comparant les mortiers comprenant de la silice telle qu'utilisée selon la présente invention (Comp.1 à Comp.5) et les témoins ne comprenant pas de silice (Témoin1 et Témoin2), l'ajout de silice telle qu'utilisée selon la présente invention a amélioré les résistances mécaniques en compression au-delà de 1 jour après le gâchage.

Des compositions avaient été réalisées avec plus de 5 % en masse de silice, mais cette quantité de silice a entraîné des effets secondaires négatifs, par exemple sur la rhéologie des compositions.

### Exemple 2

L'effet de la silice utilisée selon la présente invention sur la cinétique d'acquisition des résistances mécaniques a également pu être illustré par la mesure de la quantité de strätlingite dans la composition hydraulique après le gâchage. En effet, la strätlingite est l'hydrate formé lors de l'hydratation de la phase bélite du clinker sulfoalumineux bélitique.

La composition hydraulique testée était un coulis comprenant le ciment 3 et de l'eau, et ayant un rapport massique eau / ciment de 0,5.

Le coulis a été préparé en mélangeant manuellement le ciment et l'eau pendant 2 minutes.

Le coulis a été coulé dans des piluliers de 1 cm de diamètre et 5 cm de hauteur.

A chaque échéance de 3, 7 et 14 jours, le coulis durci a été broyé manuellement dans un mortier en porcelaine jusqu'à obtention d'une poudre.

L'hydratation de cette poudre a été stoppée par un lavage à l'acétone puis un lavage à l'éther. Une fois sec, le résidu a été analysé par microscopie à diffraction X et analyse thermogravimétrique (= ATG = perte de masse en fonction de la température). Les phases minéralogiques ont été quantifiées par analyse Rietveld. Les résultats obtenus ont été rapportés à la masse effective de l'échantillon, comme cela se fait habituellement.

Le **Tableau 2** ci-après présente les compositions testées et les résultats obtenus pour la quantité de strätlingite à différentes échéances en pourcentage massique par rapport à la masse de coulis. Le Coulis-1 ne comprenait pas de silice utilisée selon la présente invention. Le Coulis-2 et le Coulis-3 comprenaient respectivement 1 % et 2 % de silice utilisée selon la présente invention en masse par rapport à la masse de ciment.

**Tableau 2**

| | **Coulis-1** | **Coulis-2** | **Coulis-3** |
|---|---|---|---|
| **3 jours après gâchage** | 0 | 0 | 10 |
| **7 jours après gâchage** | 0 | 12 | 28 |
| **14 jours après gâchage** | 5 | 35 | 42 |

D'après le **Tableau 2** ci-avant, en comparant les Coulis-2 et 3 comprenant de la silice utilisée selon la présente invention et le Coulis-1 ne comprenant pas de silice, il a été constaté que l'ajout de silice a permis de former de la strätlingite plus tôt et en plus grande quantité. L'amélioration de la cinétique d'hydratation, et ainsi de la cinétique d'acquisition des résistances, par l'ajout de silice a pu être démontrée.

## Revendications

1. Liant hydraulique comprenant un clinker sulfoalumineux bélitique et de la silice ayant une surface spécifique BET sous azote d'au moins 50 m²/g, la quantité de silice varie de 0,5 à 3 %, pourcentage exprimé en masse par rapport à la masse de liant.

2. Liant hydraulique selon l'une quelconque des revendications précédentes, dans lequel le clinker est un clinker bélite-calcium-sulfoaluminate-ferrite (BCSAF).

3. Composition hydraulique comprenant de l'eau et un liant hydraulique selon l'une quelconque des revendications précédentes.

4. Un objet mis en forme pour le domaine de la construction comprenant un liant hydraulique selon l'une quelconque des revendications 1 ou 2.

5. Procédé de fabrication d'un liant hydraulique selon l'une quelconque des revendications 1 ou 2, dans lequel un clinker sulfoalumineux bélitique est mis en contact avec 0,5 à 3 % de silice, pourcentage en masse par rapport à la masse de liant.

6. Procédé selon la revendication précédente, dans lequel le clinker et la silice sont mélangés ou co-broyés.

7. Utilisation de 0,5 à 3 % de silice, pourcentage en masse par rapport à la masse de liant, pour améliorer la résistance en compression au-delà de 1 jour après le gâchage d'un clinker sulfoalumineux bélitique, la silice ayant une surface spécifique BET sous azote d'au moins 50 m²/g.

## Patentansprüche

1. Hydraulisches Bindemittel, das einen Belit-Sulfoaluminat-Klinker und Siliziumdioxid umfasst, welches eine spezifische Oberfläche BET unter Stickstoff von mindestens 50 m^{2/}g aufweist, wobei die Menge an Siliziumdioxid, in Masseprozent auf die Bindemittelmasse bezogen ausgedrückt, von 0,5 bis 3 % schwankt.

2. Hydraulisches Bindemittel nach einem der vorstehenden Ansprüche, wobei der Klinker ein Belit-Calcium-Sulfoaluminat-Ferrit- (BCSAF) Klinker ist.

3. Hydraulische Zusammensetzung, die Wasser und ein hydraulisches Bindemittel nach einem der vorstehenden Ansprüche umfasst.

4. In Form gebrachter Gegenstand für den Bereich des Bauwesens, der ein hydraulisches Bindemittel nach einem der Ansprüche 1 oder 2 umfasst.

5. Verfahren zur Herstellung eines hydraulischen Bindemittels nach einem der Ansprüche 1 oder 2, wobei ein Belit-Sulfoaluminat-Klinker mit 0,5 bis 3 % Siliziumdioxid, Masseprozent auf die Bindemittelmasse bezogen, in Kontakt gebracht wird.

6. Verfahren nach dem vorstehenden Anspruch, wobei der Klinker und das Siliziumdioxid vermischt oder gemeinsam vermahlen werden.

7. Verwendung von 0,5 bis 3 % Siliziumdioxid, Masseprozent auf die Bindemittelmasse bezogen, um die Kompressionsfestigkeit über Tag 1 hinaus nach dem Anrühren eines Belit-Sulfoaluminat-Klinkers zu verbessern, wobei das Siliziumdioxid eine spezifische Oberfläche BET unter Stückstoff von mindestens 50 m²/g aufweist.

## Claims

1. Hydraulic binder comprising a belitic sulfoaluminous clinker and silica having a BET specific surface area under nitrogen of at least 50 m²/g, the amount of silica varies between 0.5 to 3%, a percentage expressed by mass based on the binder mass.

2. Hydraulic binder according to one of the previous claims, wherein the clinker is a belite-calcium-sulfoaluminate-ferrite (BCSAF) clinker.

3. Hydraulic composition comprising water and a hydraulic binder according to any of the previous claims.

4. A shaped object for the building field comprising a hydraulic binder according to any of claims 1 or 2.

5. Method for manufacturing a hydraulic binder according to any of claims 1 or 2, wherein a belitic sulfoaluminous clinker is put into contact with 0.5 to 3% of silica, a mass percentage based on the binder mass.

6. Method according to the preceding claim, wherein the clinker and the silica are mixed or milled together.

7. Use of 0.5 to 3% of silica, a mass percentage based on the binder mass, for improving compressional strength beyond 1 day after mixing of a belitic sulfoaluminous clinker, the silica having a BET specific surface area under nitrogen of at least 50 m²/g.
